# EUROPÄISCHE PATENTANMELDUNG

(11) **EP 2 148 265 A2**
(43) Veröffentlichungstag der Anmeldung: **27.01.2010**
(21) Anmeldenummer: 09009409.5
(22) Anmeldetag: 20.07.2009
(51) Int. Cl.: G06F 3/041

(54) **Berührungsempfindliches Frontpanel für einen Berührungsbildschirm**

(30) Priorität: 25.07.2008 DE 102008034987
(71) Anmelder: Phoenix Contact GmbH & Co. KG, 32825 Blomberg (DE)
(72) Erfinder: Prein, Olaf, 32676 Lüdge-Rischenau (DE)
(74) Vertreter: Kampfenkel, Klaus

(57) **Zusammenfassung**

Die Erfindung betrifft ein berührungsempfindliches Frontpanel für einen Berührungsbildschrim mit einem berührungsunempfindlichen Frontpanel-Bereich (107) und einem berührungsempfindlichen Frontpanel-Bereich (103), der von dem berührungsunempfindlichen Frontpanel-Bereich (107) oder von einem weiteren berührungsempfindlichen Frontpanel-Bereich (105) haptisch unterscheidbar ist.

## Beschreibung

Die vorliegende Erfindung betrifft das Gebiet der Berührungsbildschirme.

Moderne Industriemaschinen werden oft mithilfe von Berührungsbildschirmen, so genannten Touch Displays, bedient, welche beispielsweise eine Anordnung von berührungsempfindlichen Frontpanel-Bereichen aufweisen. Die berührungsempfindlichen Frontpanel-Bereiche können beispielsweise als Kurzhubtaster oder Knackfrösche ausgebildet und vorgesehen sein, bei Berührung ein Auslösen eines dem berührungsempfindlichen Frontpanel-Bereich zugeordneten Vorgangs zu initiieren. Nachteilig an derartigen Touch Displays ist jedoch, dass insbesondere bei schlechten Lichtverhältnissen die Wahrscheinlichkeit einer Fehlbetätigung ansteigt.

Es ist die Aufgabe der vorliegenden Erfindung, ein Konzept für Berührungsbildschirme zu schaffen, mit welchem die Wahrscheinlichkeit einer Fehlbetätigung reduziert wird.

Diese Aufgabe wird durch die Merkmale der unabhängigen Ansprüche gelöst. Vorteilhafte Weiterbildungsformen der Erfindung sind in den abhängigen Ansprüchen wiedergegeben.

Die Erfindung basiert auf der Erkenntnis, dass die Fehlbetätigungswahrscheinlichkeit reduziert werden kann, wenn ein Benutzer einer Berührungsanzeige oder eines Berührungsbildschirms eine haptisch wahrnehmbare Rückmeldung über einen berührten Bereich bekommt. Dadurch kann der Benutzer den Berührungsbildschirm sozusagen "blind" bedienen, was zu einer Reduktion der Fehlbetätigungswahrscheinlichkeit führt.

Die Erfindung betrifft ein berührungsempfindliches Frontpanel für einen Berührungsbildschrim, mit einem berührungsunempfindlichen Frontpanel-Bereich und einem berührungsempfindlichen Frontpanel-Bereich, der von dem berührungsunempfindlichen Frontpanel-Bereich oder von einem weiteren berührungsempfindlichen Frontpanel-Bereich haptisch unterscheidbar ist.

Gemäß einer Ausführungsform ist der berührungsempfindliche Frontpanel-Bereich oder der weitere berührungsempfindliche Frontpanel-Bereich druckempfindlich.

Gemäß einer Ausführungsform ist dem berührungsempfindlichen Frontpanel-Bereich oder dem weiteren berührungsempfindlichen Frontpanel-Bereich eine Vibrationseinrichtung zugeordnet oder der berührungsempfindliche Frontpanel-Bereich bzw. der weitere berührungsempfindliche Frontpanel-Bereich umfasst eine Vibrationseinrichtung, welche ausgebildet ist, den berührungsempfindlichen Frontpanel-Bereich oder den weiteren berührungsempfindlichen Frontpanel-Bereich bei Berührung desselben in Vibration, insbesondere in eine durch einen Benutzer festlegbare Vibration, zu versetzen.

Gemäß einer Ausführungsform umfasst der berührungsempfindliche Frontpanel-Bereich oder der weitere berührungsempfindliche Frontpanel-Bereich eine Erhebung, insbesondere eine Prägung.

Gemäß einer Ausführungsform umfasst der berührungsempfindliche Frontpanel-Bereich oder der weitere berührungsempfindliche Frontpanel-Bereich einen konvexen Bereich oder einen konkaven Bereich, wobei der konvexe Bereich oder der konkave Bereich zumindest teilweise durch eine Umrandungswulst umrandet ist.

Gemäß einer Ausführungsform ist der berührungsunempfindliche Frontpanel-Bereich glatt oder umfasst haptische Merkmale, welche sich von haptischen Merkmalen des berührungsempfindlichen Frontpanel-Bereichs oder des berührungsempfindlichen Frontpanel-Bereichs unterscheiden.

Gemäß einer Ausführungsform umfasst das berührungsempfindliche Frontpanel eine akustische Signaltoneinrichtung, welche ausgebildet ist, akustisch auf die Berührung des berührungsempfindlichen Frontpanel-Bereichs durch einen dem berührungsempfindlichen Frontpanel-Bereich zugeordneten Signalton hinzuweisen.

Gemäß einer Ausführungsform umfasst das berührungsempfindliche Frontpanel eine Mehrzahl von berührungsempfindlichen Frontpanel-Bereichen und eine Mehrzahl von berührungunsempfindlichen Frontpanel-Bereichen, wobei die Mehrzahl der berührungsempfindlichen Frontpanel-Bereiche haptisch von der Mehrzahl der berührungunsempfindlichen Frontpanel-Bereiche und/oder untereinander unterscheidbar ist.

Gemäß einer Ausführungsform umfasst der berührungsempfindliche Frontpanel-Bereich oder der weitere berührungsempfindliche Frontpanel-Bereich eine Anzeigeschicht, eine auf der Anzeigeschicht angeordnete berührungsempfindliche, insbesondere druckempfindliche, Schicht, eine auf der berührungsempfindlichen Schicht angeordnete Vibrationsschicht und eine auf der Vibrationsschicht angeordnete haptische Schicht.

Die Erfindung betrifft ferner einen Berührungsbildschirm mit einem berührungsempfindlichen Frontpanel gemäß der vorliegenden Erfindung. Das berührungsempfindliche Frontpanel bildet eine Bedienschnittstelle zwischen der in dem Bildschirm beispielsweise angeordneten Elektronik und einem Benutzer. Die in dem Bildschirm angeordnete Elektronik ist beispielsweise vorgesehen, die Berührung der berührungsempfindlichen Frontpanel-Bereiche zu detektieren und beispielsweise diesen Frontpanel-Bereichen zugeordnete Steuersignale für eine Maschine zu erzeugen bzw. auszugeben.

Weitere Ausführungsbeispiele der Erfindung werden Bezug nehmend auf die beiliegenden Zeichnungen näher erläutert.

Es zeigen:
Fig. 1 ein berührungsempfindliches Frontpanel für einen berührungsempfindlichen Bildschirm;
Fig. 2 einen Aufbau eines berührungsempfindlichen Frontpanels;
Fig. 3A eine Ausgestaltung eines berührungsempfindlichen Frontpanel-Bereichs;
Fig. 3B eine Ausgestaltung eines berührungsempfindlichen Frontpanel-Bereichs;
Fig. 4A einen Querschnitt eines berührungsempfindlichen Frontpanel-Bereichs;
Fig. 4B einen Querschnitt eines berührungsempfindlichen Frontpanel-Bereichs; und
Fig. 4C einen Querschnitt eines berührungsempfindlichen Frontpanel-Bereichs.

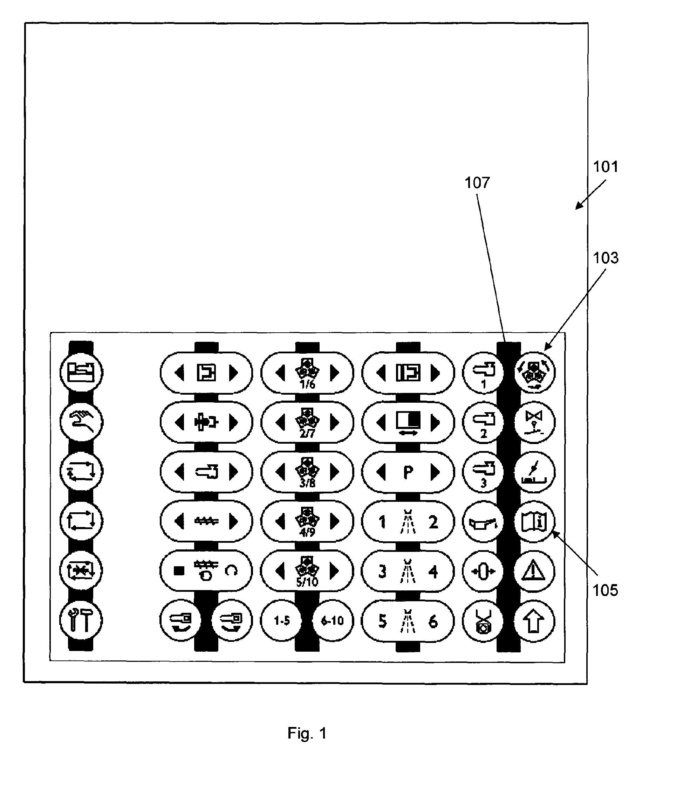

Fig. 1 zeigt ein berührungsempfindliches Frontpanel 101 für einen Berührungsbildschirm mit beispielsweise einem ersten berührungsempfindlichen Frontpanel-Bereich 103 und einem zweiten berührungsempfindlichen Frontpanel-Bereich 105 einer Mehrzahl von berührungsempfindlichen Frontpanel-Bereichen, welche in Zeilen und Reihen angeordnet sein können. Darüber hinaus ist beispielsweise zwischen zwei Spalten mit berührungsempfindlichen Frontpanel-Bereichen ein berührungsunempfindlicher Frontpanel-Bereich 107 angeordnet. Ferner kann zwischen zwei benachbarten, berührungsempfindlichen Frontpanel-Bereichen jeweils ein berührungsunempfindlicher Frontpanel-Bereich vorgesehen sein. Wie in Fig. 1 beispielhaft dargestellt ist jedem der berührungsempfindlichen Frontpanel-Bereiche 103, 105, durch beispielsweise ein Piktogramm jeweils ein Vorgang zugeordnet, der bei Berührung des jeweiligen berührungsempfindlichen Frontpanel-Bereichs 103, 105, ausgelöst wird.

Die berührungsempfindlichen Frontpanel-Bereiche oder nur einige der berührungsempfindlichen Frontpanel-Bereiche sind bevorzugt von den berührungsunempfindlichen Frontpanel-Bereichen des in Fig. 1 dargestellten Frontpanels haptisch unterscheidbar, so dass ein Benutzer bei Berührung eines derartigen berührungsempfindlichen Frontpanel-Bereichs beispielsweise nicht nur eine optische, sondern auch eine gefühlte Rückmeldung bekommt, dass beispielsweise der diesen Frontpanel-Bereich betätigende Finger des Benutzers an der richtigen Position ist und den gewünschten berührungsempfindlichen Frontpanel-Bereich berührt.

Bevorzugt weisen die berührungsempfindlichen Frontpanel-Bereiche ein beispielsweise integriertes und fühlbareres Profil auf, das beispielsweise eine Randwulst oder eine Erhebung oder eine Prägung sein kann. Darüber hinaus kann die haptische Unterscheidbarkeit beispielsweise durch einen Vibrationsimpuls gewährleistet werden, welcher bei Berührung eines berührungsempfindlichen Frontpanel-Bereichs ausgelöst werden kann. Gleichzeitig kann durch eine zusätzliche Prägung oder durch das Vorsehen von Erhebungen ein zusätzlicher Schutz für das Frontpanel erzielt werden.

Durch die haptische Unterscheidbarkeit der berührungsempfindlichen Frontpanel-Bereiche von beispielsweise den berührungsunempfindlichen Frontpanel-Bereichen oder auch untereinander kann ein Benutzer des Frontpanels dieses auch bei schwierigen Sichtverhältnissen bedienen. Darüber hinaus kann beispielsweise durch eine Animation und/oder durch Farbumschläge das Betätigen der ausgewählten Funktion auf dem ein Display bildenden Frontpanel dargestellt werden. Hierzu können haptische Merkmale wie beispielsweise Erhebungen beispielsweise durchsichtig oder teilweise durchsichtig sein, so dass die Sicht zum darunter liegenden Display nicht oder nur in einem vertretbaren Umfang beeinträchtigt wird.

Gemäß einer weiteren Ausführungsform kann neben einem Signalimpuls, beispielsweise einem Vibrationsimpuls, zusätzlich eine akustische Rückkopplung vorgesehen sein, welche den Benutzer akustisch auf das Betätigen des jeweiligen berührungsempfindlichen Frontpanel-Bereichs hinweist. Diese Funktionalität kann für den gesamten Frontpanel-Bereich oder auch nur für Frontpanel-Unterbereiche implementiert sein.

Zum Einstellen eines Bedienungslevels kann beispielsweise auf die RFID-Technologie (RFID: Radio Frequency Identification) oder auf eine vergleichbare Technologie zugegriffen werden, wobei eine dazugehörige Leseeinheit in das Frontpanel integriert sein kann. Darüber hinaus kann zur Bedienung des Frontpanels bzw. der Frontpanel-Bereiche eine digitale Kamera beispielsweise in Form eines CCD-Chips (CCD: Charge-Coupled Device) vorgesehen sein,.

Die berührungsempfindlichen Frontpanel-Bereiche sind bevorzugt druckempfindlich und können darüber hinaus als Kurzhubtaster oder als so genannte Knackfrösche, welche bei Berührung einen Knackton erzeugen, ausgebildet sein.

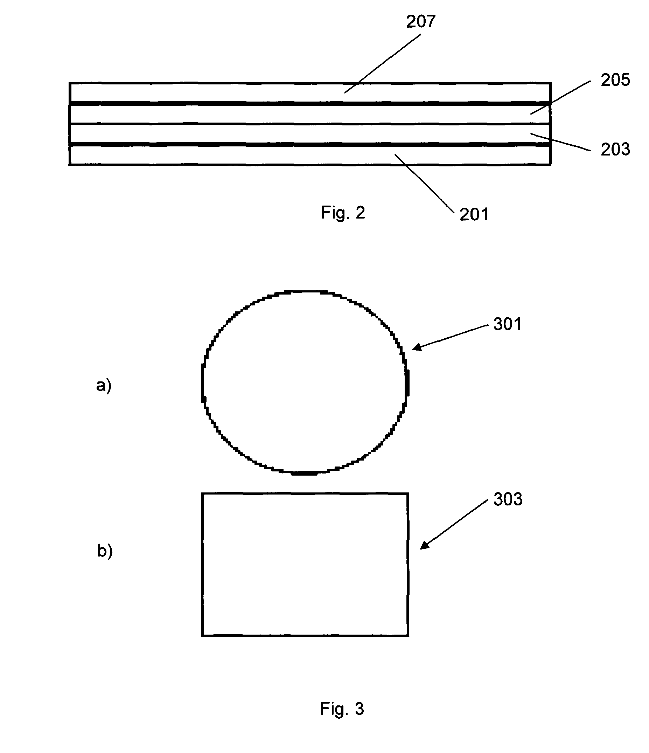

Fig. 2 zeigt eine Struktur eines berührungsempfindlichen Frontpanel-Bereichs mit einer Anzeige- bzw. Display-Schicht 201, einer darauf angeordneten berührungsempfindlichen Schicht 203, einer auf der berührungsempfindlichen Schicht 203 angeordneten Vibrationsschicht 205 sowie einer auf der Vibrationsschicht 205 angeordneten haptischen Schicht 207. Die haptische Schicht 207 umfasst beispielsweise haptisch wahrnehmbare Merkmale wie Prägungen, Erhebungen, Ausnehmungen, Umrandungen oder sonstige haptische Merkmale, welche bei Berührung unterscheidbar und wahrnehmbar sind. Die Vibrationsschicht 205 kann beispielsweise durch Ausnutzung des piezoelektrischen Effektes oder durch eine direkte mechanische Einwirkung in Vibration versetzt werden.

In den Figuren 3A und 3B sind beispielhaft ein kreisförmiger berührungsempfindlicher Frontpanel-Bereich 301 sowie ein rechteckförmiger berührungsempfindlicher Frontpanel-Bereich 303 dargestellt.

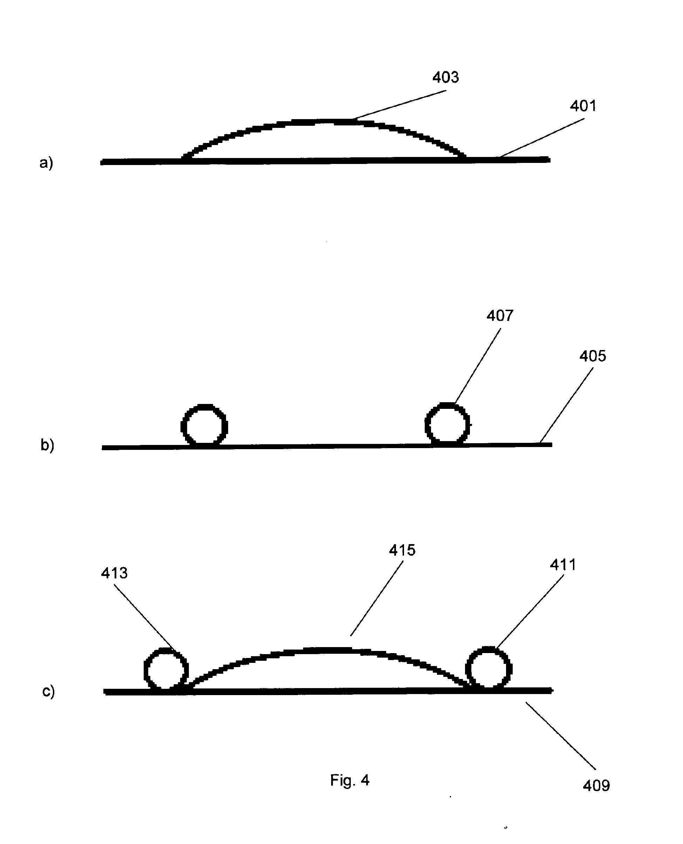

Fig. 4A zeigt einen Querschnitt eines berührungsempfindlichen Frontpanel-Bereichs mit einer Unterlage 401, beispielsweise einer Folie, sowie einer auf der Unterlage 401 angeordneten konkaven Erhebung 403.

Fig. 4B zeigt einen Querschnitt eines berührungsempfindlichen Frontpanel-Bereichs mit einer Unterlage 405, beispielsweise einer Folie, auf der wulstförmige Abschnitte 411 und 413 angeordnet sind und zumindest teilweise eine auf der Unterlage 409 angeordnete konkave Erhebung 415 ein- bzw. umschließen.

## Patentansprüche

1. Berührungsempfindliches Frontpanel für einen Berührungsbildschrim, mit:
einem berührungsunempfindlichen Frontpanel-Bereich (107) und einem berührungsempfindlichen Frontpanel-Bereich (103), der von dem berührungsunempfindlichen Frontpanel-Bereich (107) oder von einem weiteren berührungsempfindlichen Frontpanel-Bereich (105) haptisch unterscheidbar ist.

2. Berührungsempfindliches Frontpanel gemäß Anspruch 1, wobei der berührungsempfindliche Frontpanel-Bereich (103) oder der weitere berührungsempfindliche Frontpanel-Bereich (105) druckempfindlich ist.

3. Berührungsempfindliches Frontpanel gemäß einem der vorstehenden Ansprüche, wobei dem berührungsempfindlichen Frontpanel-Bereich (103) oder dem weiteren berührungsempfindlichen Frontpanel-Bereich (105) eine Vibrationseinrichtung zugeordnet ist oder wobei der berührungsempfindliche Frontpanel-Bereich (103) oder der weitere berührungsempfindliche Frontpanel-Bereich (105) eine Vibrationseinrichtung aufweist, welche ausgebildet ist, den berührungsempfindlichen Frontpanel-Bereich (103) oder den weiteren berührungsempfindlichen Frontpanel-Bereich (105) bei Berührung desselben in Vibration, insbesondere in eine durch einen Benutzer festlegbare Vibration, zu versetzen.

4. Berührungsempfindliches Frontpanel gemäß einem der vorstehenden Ansprüche, wobei der berührungsempfindliche Frontpanel-Bereich (103) oder der weitere berührungsempfindliche Frontpanel-Bereich (105) eine Erhebung, insbesondere eine Prägung, aufweist.

5. Berührungsempfindliches Frontpanel gemäß einem der vorstehenden Ansprüche, wobei der berührungsempfindliche Frontpanel-Bereich (103) oder der weitere berührungsempfindliche Frontpanel-Bereich (105) einen konvexen Bereich oder einen konkaven Bereich aufweist, wobei der konvexe Bereich oder der konkave Bereich zumindest teilweise durch eine Umrandungswulst umrandet ist.

6. Berührungsempfindliches Frontpanel gemäß einem der vorstehenden Ansprüche, wobei der berührungsunempfindliche Frontpanel-Bereich (107) glatt ist oder haptische Merkmale aufweist, welche sich von haptischen Merkmalen des berührungsempfindlichen Frontpanel-Bereichs (103) oder des berührungsempfindlichen Frontpanel-Bereichs (105) unterscheiden.

7. Berührungsempfindliches Frontpanel gemäß einem der vorstehenden Ansprüche, das ferner eine akustische Signaltoneinrichtung aufweist, welche ausgebildet ist, akustisch auf die Berührung des berührungsempfindlichen Frontpanel-Bereichs (103, 105) durch einen dem berührungsempfindlichen Frontpanel-Bereich (103, 105) zugeordneten Signalton hinzuweisen.

8. Berührungsempfindliches Frontpanel gemäß einem der vorstehenden Ansprüche, welche eine Mehrzahl von berührungsempfindlichen Frontpanel-Bereichen (103, 105) und eine Mehrzahl von berührungunsempfindlichen Frontpanel-Bereichen (107) aufweist, wobei die Mehrzahl der berührungsempfindlichen Frontpanel-Bereiche (103, 105) haptisch untereinander oder von der Mehrzahl der berührungunsempfindlichen Frontpanel-Bereiche (107) unterscheidbar ist.

9. Berührungsempfindliches Frontpanel gemäß einem der vorstehenden Ansprüche, wobei der berührungsempfindliche Frontpanel-Bereich (103) oder der weitere berührungsempfindliche Frontpanel-Bereich (105) eine Anzeigeschicht (201), eine auf der Anzeigeschicht (201) angeordnete berührungsempfindliche, insbesondere druckempfindliche, Schicht (203), eine auf der berührungsempfindlichen Schicht (203) angeordnete Vibrationsschicht (205) und eine auf der Vibrationsschicht (205) angeordnete haptische Schicht (207) aufweist.

10. Berührungsbildschirm mit einem berührungsempfindlichen Frontpanel gemäß einem der Ansprüche 1 bis 9.
